# EUROPEAN PATENT SPECIFICATION

(11) **EP 2 926 530 B1**
(45) Date of publication and mention of the grant of the patent: **19.10.2016**
(21) Application number: 13788990.3
(22) Date of filing: 08.11.2013
(51) Int. Cl.: H04L 29/08, G06Q 30/06

(54) **STATUS TRACKING SYSTEM**
STATUSVERFOLGUNGSSYSTEM
SYSTÈME DE SUIVI D'ÉTAT

(30) Priority: 29.11.2012 IN DE36722012
(43) Date of publication of application: 07.10.2015
(73) Proprietor: ALCATEL LUCENT, 92100 Boulogne-Billancourt (FR)
(72) Inventor: BAWEJA, Varun, Udyog Gurgaon 122016 (IN); ANSARI, Mohammed, Bahadurgarh 124507 (IN)
(74) Representative: Mouney, Jérôme
(86) International application number: PCT/EP2013/073368
(87) International publication number: WO 2014/082833

(56) References cited:
- WO-A1-2011/112752
- US-A1- 2007 106 568
- US-A1- 2008 103 972

## Description

### FIELD OF INVENTION

The present subject matter relates to computing systems and, particularly, but not exclusively, to computing systems in a communication network.

### BACKGROUND

Computing devices, such as cellular phones, smart phones, personal digital assistants (PDAs), tablets, laptops, and desktops provide users with a variety of applications, services, and networking capabilities. Such computing devices have seemingly become a ubiquitous part of today's lifestyle and digital technology has found its way into different aspects of human life, professional as well as personal. In such a digital age, companies and individuals are finding that they can communicate and transact business with their customers, suppliers, distributors, and agents quickly and effectively via digital means, such as the computing devices rather than through traditional channels. Individuals can make reservations in a restaurant by a phone call, patients can book appointments through web services, and busy people can purchase items online. Hence, people are indulging in transactions, such as, sales, purchases, auctions, donations, bookings, cancellations, and various other similar transactions through computing systems and, such transactions are becoming increasingly popular.

More often than not, individuals processing transactions are provided with a reference number specific to the transaction. The individuals can refer to their transaction in future based on such reference numbers to uniquely identify and retrieve the details of the transaction. It is also common in certain industries and modes of operations that a transaction processed by an individual is not completed at the time of execution. For example, an individual trying to book a train ticket may receive a waiting list booking which may be confirmed in due course of time. Generally, for such a booking transaction, individuals are provided with a Passenger Name Record (PNR) number that acts as a reference number utilizing which, the individuals can make status enquiries. Similarly, individuals may buy an item from an online portal which may take a couple of days to be delivered to the intended address after the completion of the order. In such situations also, the individuals are generally provided with a transaction and tracking number based on which the status of the delivery can be tracked by the individuals. Therefore, the customers provided with a reference number for any transaction may track the progress of their transaction.

Generally, the tracking of the progress or status of any transaction is achieved by way of personal, telephonic, or fax inquiry to the other party. However, with digitization and readily available modes of communication, the tracking of progress or status of such transactions can also be carried out by way of online enquires.

It is also known the US patent application reference US2007/106568.

### SUMMARY

This summary is provided to introduce concepts related to tracking status of a transaction. This summary is not intended to identify essential features of the claimed subject matter nor is it intended for use in determining or limiting the scope of the claimed subject matter.

According to an embodiment, a method for providing updated status of a transaction to a user is described. The method includes receiving a status update request by a server, from a communication device of a user, to track status of the transaction between the user and an other party, where the status update request comprises at least one of tracking parameters and update parameters, associated with the status update, and where the update parameters define preferences of the user. The method further includes polling the other party through a communication network, based on the tracking parameters and the update parameters to obtain an updated status of the transaction. Furthermore, the method includes providing the updated status of the transaction to the communication device of the user based on the update parameters.

In another embodiment, a system for providing updated status of a transaction to a user is described. The system includes a processor. The system further includes a request analysis module coupled to the processor, configured to receive a status update request, from the user, to track status of the transaction between the user and other party, wherein the status update request comprises at least of tracking parameters and update parameters associated with the status update. The system also includes a querying module coupled to the processor, configured to poll the other party based on the tracking parameters and the user preferences to obtain an updated status of the transaction. Further, the system includes a reporting module coupled to the

In one embodiment a computer readable medium having embodied thereon a computer program for executing a method for providing status update for a transaction is described. The method include receiving a status update request, from a user, to track status of the transaction between the user and other party, wherein the status update request comprises at least of tracking parameters and update parameters associated with the status update. The method further includes polling the other party based on the tracking parameters and the user preferences to obtain an updated status of the transaction. Furthermore, the method includes providing the updated status of the transaction to the user based on the user preferences.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 illustrates a communication network environment implementing system for status tracking, in accordance with an embodiment of the present subject matter;
Figure 2 illustrates a method for providing updated status of a transaction to a user, in accordance with an embodiment of the present subject matter; and

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

Systems and methods for tracking status of a transaction are described herein. The methods can be implemented in various computing devices communicating through various networks. Although the description herein is with reference to systems of a communication network, the methods and systems may be implemented in other systems capable of providing status of transactions, albeit with a few variations, as will be understood by a person skilled in the art.

In a busy lifestyle of cities, multiple transactions take place during a day. Many organizations purchase and deliver products; multiple users buy items of their need; people make reservations at various institutes like, hospitals, hotels, clinics, and the like and; travelers book tickets for travel from one place to another. Several of transactions are completed either on the spot or with in a short duration of time period since initiation. However, there are many transactions that take some time to complete. For example, an individual may try to book a flight ticket for his travel from United States to Bhutan which may not be confirmed due to non availability of seats. In such a situation, the airline may decide to refuse a ticket to the individual or, may provide him with a waiting list ticket that may get confirmed in case there is a cancellation. Similarly, other transactions, such as a courier delivery and online shopping may take time to complete in their entirety as shipping and delivery of product may extend to a period of days and even weeks.

In cases where the transactions are not completed immediately, individuals feel a need to track the status of the transaction. An updated status of a transaction may allow the users to plan their future activities and, may also provide confirmation of the intended progress of the transaction. For example, any reduction in wait list number of a passenger may provide him the indication of a improved probability of confirmation of the reservation based on which he may plan his travel. Similarly, an update in the shipment details may allow a user to foresee the time duration left for delivery of the shipment.

Conventionally, companies and individuals depend on methods of personal enquiry of the status for any transaction from the other involved party based on a reference number provided for the transaction. People either visit the office premises of the other party or obtain the status of the transaction from an authorized counter of the other party. In situations where a personal enquiry is not possible, telephone services and facsimile (fax) services are used. In industries such as logistics services where transactions takes days for completion, tracking of status is of utmost importance and, service companies providing the logistics support also provide dedicated telephone numbers, toll-free lines, dedicated operators, and Interactive Voice Response Systems (IVRS) for facilitating in providing status updates to customers.

With the growth of technology and the increasing popularity of World Wide Web, mobile computing, and communications devices, new services have emerged on the Internet. Mobile terminals are able to connect to central databases and deliver information to users when needed and wherever needed. Companies and service providers are also utilizing the power of technology to provide web portals, applications, and web services through which users can track the status of their transactions. For instance, based on the reference number provided along with the transaction, customers can query a database of the service providing party to get an updated status of the transaction. Although the availability of all such services have made it much easier for the customers to track the status of their transactions, customers still have to initiate an enquiry request through these services to get the status update.

Recently, service providers have adopted a methodology through which a status update of a transaction can be automatically provided to the customers without an explicit initiation by the customers. Customers are intimated about the status of their transaction either through phone calls, Short Message Service (SMS), e-mails or notifications. Generally such automated status updates are provided either on a periodic basis, or as and when there is a change in the status of the transaction. For example, an airline which has provided a wait listed ticket to a passenger may provide the status of the booking to the user on daily basis until the ticket gets confirmed or, may provide an update of ticket reservation status as and when it changes.

However, in the above described techniques, the status update provided to the user is dictated by the other party without providing any choice or no control to the user. The automated updates are provided based on a policy of the other party that does not account for user choices or preferences of the user. For example, for a customer who may only want an update upon change in status of the transaction, daily or hourly update of the status might be wastage of resource and, may also act as spam for the customer. Similarly, another customer may wish to receive hourly updates where the updates provided may be on a daily basis. In such a scenario, to get updated status every hour, the customer may have to initiate other methods, such as web enquiry, phone enquiry or fax enquiry. Therefore, for the users who want updated access to status information, the currently available techniques either limit the access to self initiation or depend on the automated status updates based on the choice exercised by the other parties.

According to an implementation of the present subject matter, methods for status tracking based on user preferences are described herein. The described methods on one hand allow efficient method of tracking the status of a transaction; on the other, provide mechanisms to reduce unwanted and untimely status updates. According to the described implementation of the present subject matter, the status update may be provided to a user for different transactions, such as flight reservation, train reservation, bus reservation, cinema ticket booking, logistic transactions, medical appointments, and purchase/delivery reports. Although the description is described with respect to reservation systems, the described method can be implemented for other type of transactions as well, albeit with a few variations, as will be understood by a person skilled in the art.

Further, the status of the transactions may be tracked through different computing devices, servers, and users handling/utilizing different functionalities, such as mail servers, central directory servers, database servers, file servers, print servers, web servers, application servers, notebooks, tablets, network access adaptors, and the like.

In one implementation of the present subject matter, a service provider providing communication network connectivity to a user may provide a service of providing status updates to the user. It would be understood by those skilled in the art that to obtain connectivity to a communication network or a Radio Access Network (RAN), users generally subscribe to a service provider through which various services can be availed. For example, a user may subscribe to a service provider 'A' for availing 3G services. Similarly, another user may subscribe to a service provider 'B' to obtain connectivity to communication network and Internet through Internet Protocol TV (IPTV). In said implementation, the service provider may receive requests from users to provide status tracking services. It would understood by those skilled in the art that a service provider provides connectivity to a user with a communication network to communicate with other users through their communication devices.

In another implementation, the service of providing status updates to a user based on user preferences may be provided by a third party other than the user or the other party. In such an implementation, the third party may receive the user preferences through the respective service provider of the user and, may provide the updated status through a mode requested by the user. It would be understood that the third party may also be another service provider to which the user has not subscribed to and provides the service of status updates.

In one implementation, the service provider may receive a status update request from a user. The status update request might be indicative of tracking parameters of a transaction that the user wishes to receive updates for. For example, a service provider providing connectivity to a user who may wish to track the status of a train reservation, may receive a status update request from the user. The status update request may include tracking parameters as details of the transaction between the user and a railway system. Further, the request may also include a reference number associated with the transaction of reservation between the user and the railway system.

In the above described scenario, in case the user has reserved a train ticket with Indian Railways, the Indian railways through Indian Rail Catering and Tourism Corporation (IRCTC) may have provided the user with a Reservation Against Cancellation (RAC) reservation. It would be understood that a RAC reservation may get confirmed in situations where passengers with already confirmed reservations decide to cancel their tickets, thereby opening vacancy for the journey. Since the reservation provided to the user is subject to any cancellation, the user may wish to get an update on the status of the reservation periodically, say, after every 12 hours. In such a scenario, the IRCTC may provide the user the transaction details, which in this case may include the reservation details including train number, train name, starting station name, destination station name, PNR, and fare charged for the reservation. For the reservation having such details as provided by the IRCTC, the user may decide to obtain current status from the service provider to confirm the status of his transaction. The user may send a status update request to the service provider along with the transaction details as tracking parameters to uniquely provide a reference to the transaction of reservation.

It would be appreciated that the entire detail set associated with a transaction may not be provided by a user to the service provider for the purpose of reference to any transaction; the databases generally define a single entity as a primary key to uniquely identify the corresponding record. For example, in the above described scenario, the PNR provided for the reservation to the user may allow IRCTC to uniquely identify the details of the reservation made by the user. Hence, the user may provide the status update request along with the PNR of the transaction.

In one implementation, the user may also provide other party details to the service provider for the purpose of status tracking. Other party would be understood as the party with whom the user has done the transaction with. For example, in the above mentioned example of train reservation,the other party would be IRCTC. Hence, along with the transaction details that may include details, such as the reference number, the status update request may also include the details of the other party. That is, in the above described scenario of the user being provided with a RAC reservation, the user may also provide, in the status update request along with the transaction details, other party details such as 'IRCTC' name or IRCTC web enquiry Uniform Resource Locator (URL). The other party details may allow the service provider to uniquely correspond the transaction details against the provided other party to provide status update to the user.

Although it has been described that the user may provide the details of the other party, however, in one implementation the service provider may provide a list of other parties for which the service of status update can be provided to the user. From the provided list of options, the user may choose the other party from which the user has completed transaction with. The service provider may provide an exhaustive list of other parties, such as vendors, suppliers, medical sources, reservation portals, and other parties that may provide service of tracking the status of their transactions.

In another implementation of the present subject matter, the service provider may provide the user with options of defining update parameters for the status update request. The update parameters may define user preferences associated with the status update request. In said implementation, the update parameters may include, but are not limited to, frequency of update, duration of update, mode of update, and time of update. The frequency of update parameter may define the frequency with which the status update of a transaction is desired by the user. In other words, the users based on their requirements may define the time period after which they wish to receive automated updates for the status of their transaction. For example, the user with the RAC reservation may define a frequency of 4 hours after which he may wish to receive automated updates of the status of his reservation.

Similarly, the user may also choose and define the duration for which he may wish to receive the updates for the status of a transaction. That is, a user may wish to receive status updates after every 2 hours for 3 days for a transaction while another user may wish to receive updates for 1 day with a frequency of 3 hours. Hence, based on their preferences, the users may define the duration parameter of the update parameter to receive status updates. In said implementation, the user may also choose the milestone based updates, that is, the status is updated only when the status is changed to a pre-determined milestone. For example, in the above described example where the user is provided with a RAC reservation through IRCTC, the user may define the duration to update as a milestone when the status of the reservation changes from 'RAC' to a 'confirmed reservation'. In such a scenario, the service provider may dynamically determine the duration to complete when the status of the reservation changes to confirmed. In other words, the status update may be provided only till the instance the reservation is a RAC reservation and be terminated upon confirmation.

In yet another implementation, the user may choose to automatically terminate the status update requests upon completion of the transaction rather than defining a particular time limit or a specific milestone. It would be understood that different transactions may complete in different ways, for example, a travel reservation may complete on completion of the journey. A restaurant reservation may complete upon completion of dining, an appointment may complete upon completion of meeting and so on. Therefore, the service provider, based on the transaction details and the other party details, may identify the completion of the transaction to automatically terminate the updates to the user.

Furthermore, the update parameters may also include a mode of update based on which the service provider may provide status update to the user. The user may choose from various different options that may include, but not limited to, SMS, IVRS call, e-mail, telephonic call, USSD response, and others. For example, a user may choose the mode of update parameter to be an IVRS call. In such a situation, the service provider may provide the updated status of the transaction to the user through an IVRS call providing status of the transaction.

In one implementation of the present subject matter, the status update request may be received by the service provider through multiple interfaces and techniques of receiving data/information from a user. In said implementation, the service provider may receive the status update request through an Unstructured Supplementary Service Data (USSD) message in a radio access network (RAN). In another implementation, the user may provide the status update request through a SMS along with the transaction details and other party details. Similarly, the status update request may be received from the user through different techniques. Although it has been described that the status update request may be received by the service provider through RAN, it would be appreciated that the request may also be received through other means including, but not limited to, cable connections for television; two wire circuits (local loops), such as fixed telephone line plain old telephone system (POTS) networks; cable broadband networks; Integrated Services Digital Network (ISDN); Public Switched Telephone Networks (PSTN) and other variants of Digital Subscriber Line (DSL) networks including services like e-mail, alerts, IPTV, IVRS, and SMS.

In one implementation of the present subject matter, the service provider, upon receiving a status update request generates a Unique Reference Number (URN) for the request and provides it to the user. The URN can be understood be similar to a reference number of a transaction where the service provider and the user can uniquely determine the status update request and the details associated with it based on the URN.

Hence, based on the details of the transaction, the other party details, and the update parameters, the service provider may determine the status of each URN received from different users to identify the updated status of transactions. For each URN, the service provider may poll the associated other party to receive an updated status of the transaction. It would be appreciated that the updated status may be determined by the service provider based on the duration and frequency chosen by the user. In other words, for a user with a frequency of 2 hours, the polling may occur every 2 hours, whereas in a situation where the user has described a frequency of 1 day, the polling for the transaction may occur once a day.

The polling to obtain the updated status for a transaction may be based on the other party details provided by the user. The other party details may define the URLs, IVRS numbers, and other details that may allow the service provider to get an access to the query service of the other party to obtain updated status for the transaction. It would be appreciated that every polling performed may not provide a new status for a transaction as the status may have not changed for the transaction, Therefore, in situations where there is no change in the status of a transaction, the same status may be provided by the service provider to the user.

In one implementation, the updated status received by the service provider is provided to the user through one of the modes desired by the user. As explained above, the update may be provided through an e-mail, SMS, USSD message, IVRS call, and other intimation methods. In said implementation, the service provider may also charge the user for the service of providing status update based on his preferences. Further, the charging mechanism may vary based on the specific preferences of the user, such as a user wishing for updates every 2 hours may be charged more than a user wishing for updates every 6 hours and so on.

Based on the above described techniques, a user may be provided with automated updated status for a transaction based on user preferences. The user may not have to instantiate a new query request for every instance an update is desired and, instead one time status update request to the service provider may provide updated status to the user. Further, the user is also allowed to select the reporting of updates based on their preference thereby eliminating any dependency on other parties.

The described methodologies can be implemented in hardware, firmware, software, or a combination thereof. For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof. Herein, the term "system" encompasses logic implemented by software, hardware, firmware, or a combination thereof.

For a firmware and/or software implemented environment, the methodologies can be implemented with modules (e.g., procedures, functions, and so on) stored in a memory and the software instructions being executed by a processor to implement the method(s) that is described herein. Any computer readable medium tangibly embodying instructions can be used in implementing the methodologies described herein. For example, software codes and programs can be stored in a computer readable memory and which is executed by a processing unit to implement the methd that is described herein. Memory can be implemented within the processing unit or may be external to the processing unit. As used herein the term "memory" refers to any type of long term, short term, volatile, nonvolatile, or other storage devices and is not to be limited to any particular type of memory or number of memories, or type of media upon which memory is stored.

In another firmware and/or software implementation, the functions may be stored as one or more instructions or code on a non transitory computer-readable medium. Examples include computer-readable media encoded with a data structure and computer-readable media encoded with a computer program. Computer-readable media may take the form of an article of manufacturer. Computer-readable media includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media.

It should be noted that the description merely illustrates the principles of the present subject matter. It will thus be appreciated that those skilled in the art will be able to devise various arrangements that, although not explicitly described herein, embody the principles of the present subject matter and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

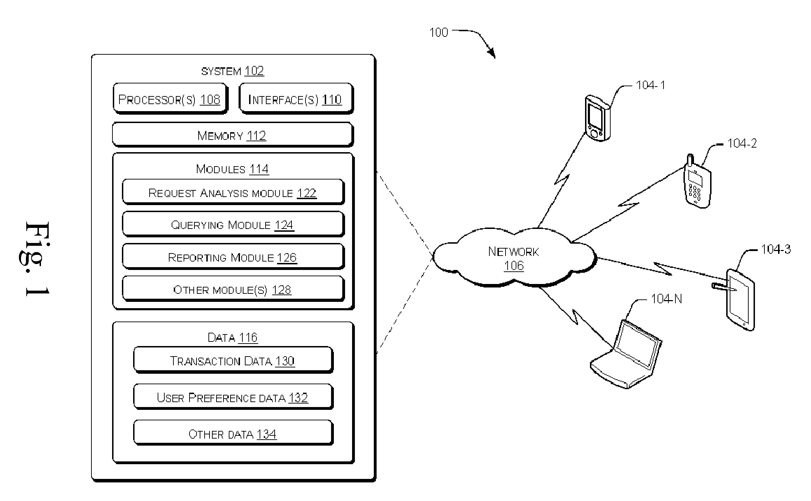

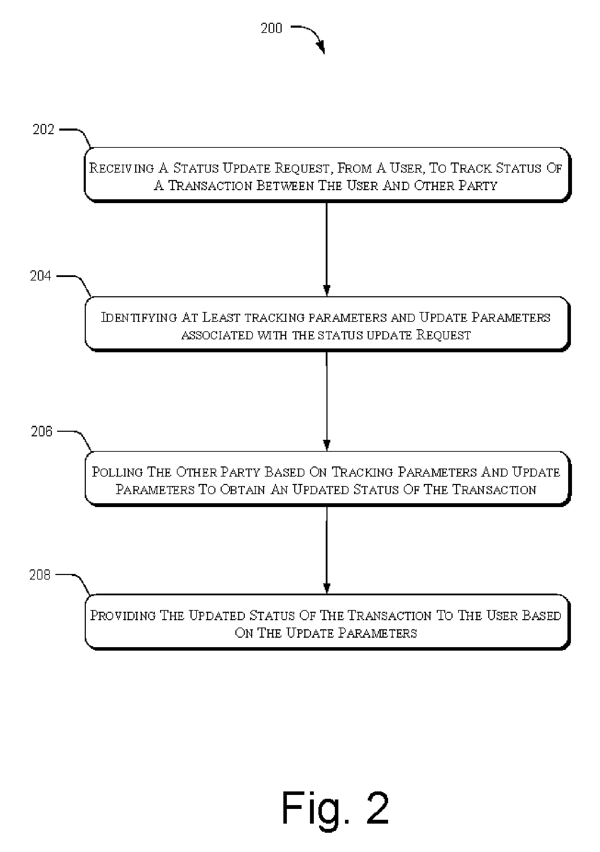

The manner in which the systems and methods shall be implemented has been explained in details with respect to the Fig. 1 and 2. While aspects of described systems and methods can be implemented in any number of different computing systems, transmission environments, and/or configurations, the embodiments are described in the context of the following exemplary system(s).

It will also be appreciated by those skilled in the art that the words during, while, and when as used herein are not exact terms that mean an action takes place instantly upon an initiating action but that there may be some small but reasonable delay, such as a propagation delay, between the initial action and the reaction that is initiated by the initial action. Additionally, the word "connected" and "coupled" is used throughout for clarity of the description and can include either a direct connection or an indirect connection.

Fig. 1 illustrates a network environment 100, implementing a system 102, for providing status update for transaction, in accordance with an embodiment of the present subject matter. The system 102 described herein, can be implemented in any network environment comprising a variety of network devices, including routers, bridges, servers, computing devices, storage devices, etc. In one implementation the system 102 is connected to one or more user devices 104-1, 104-2, 104-3, ..., 104-N, individually and commonly referred to as user device(s) 104 hereinafter, through a network 106. The user devices 104 may include multiple applications that may be running to perform several functions, as required by different users and individual organizations.

The system 102 can be implemented as a variety of servers and communication devices. The communication devices that can implement the described method(s) include, but are not limited to, mail server, central directory servers, database server, file server, print server, web server, application server, and the like. The system 102 may also be implemented as a computing device, such as a laptop computer, a desktop computer, a notebook, a workstation, a mainframe computer, a server, and the like. The system 102 described herein, can also be implemented as network entity, such as, a Radio Network Controller (RNC), Node B, Base station controller (BSC), Mobile Switching Center (MSC), Home location Register (HLR), Visiting Location Register (VLR), Application Server, Media Server, and Service Control Point in any network environment comprising a variety of network devices, including routers, bridges, servers, computing devices, storage devices, etc.

The user devices 104 may be implemented as, but are not limited to, desktop computers, hand-held devices, laptops or other portable computers, tablet computers, mobile phones, PDAs, Smartphones, and the like. Further, the user devices 104 may include devices capable of exchanging data to provide connectivity to different communicating devices and computing systems. Such devices may include, but are not limited to, data cards, mobile adapters, wireless (WiFi™) adapters, routers, a wireless modem, a wireless communication device, a cordless phone, a wireless local loop (WLL) station, and the like. As the user devices 104 may be stationary or mobile, they may also be understood as a mobile station, a terminal, an access terminal, a subscriber unit, a station, etc.

The network 106 may be a wireless or a wired network, or a combination thereof. The network 106 can be a collection of individual networks, interconnected with each other and functioning as a single large network (e.g., the internet or an intranet). Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), and Integrated Services Digital Network (ISDN). Depending on the technology, the network 106 includes various network entities, such as gateways, routers; however, such details have been omitted for ease of understanding.

In one implementation, the system 102 includes processor(s) 108. The processor 108 may be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory.

The functions of the various elements shown in the figure, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), non-volatile storage. Other hardware, conventional and/or custom, may also be included.

Also, the system 102 includes interface(s) 110. The interfaces 110 may include a variety of software and hardware interfaces that allow the system 102 to interact with the entities of the network 106, or with each other. The interfaces 110 may facilitate multiple communications within a wide variety of networks and protocol types, including wire networks, for example, LAN, cable, etc., and wireless networks, for example, WLAN, cellular, satellite-based network, etc.

In another embodiment of the present subject matter, the system 102 may also include a memory 112. The memory 112 may be coupled to the processor 108. The memory 112 can include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

Further, the system 102 may include module(s) 114 and data 116. The modules 114 and the data 116 may be coupled to the processors 108. The modules 114, amongst other things, include routines, programs, objects, components, data structures, etc., which perform particular tasks or implement particular abstract data types. The modules 114 may also be implemented as, signal processor(s), state machine(s), logic circuitries, and/or any other device or component that manipulate signals based on operational instructions.

Further, the modules 114 can be implemented in hardware, instructions executed by a processing unit, or by a combination thereof. The processing unit can comprise a computer, a processor, a state machine, a logic array or any other suitable devices capable of processing instructions. The processing unit can be a general-purpose processor which executes instructions to cause the general-purpose processor to perform the required tasks or, the processing unit can be dedicated to perform the required functions.

In another aspect of the present subject matter, the modules 114 may be machine-readable instructions (software) which, when executed by a processor/processing unit, perform any of the described functionalities. The machine-readable instructions may be stored on an electronic memory device, hard disk, optical disk or other machine-readable storage medium or non-transitory medium. In one implementation, the machine-readable instructions can be also be downloaded to the storage medium via a network connection.

In an implementation, the module(s) 114 includes a request analysis module 122, a querying module 124, a reporting module 126, and other module(s) 128. The other module(s) 128 may include programs or coded instructions that supplement applications or functions performed by the system 102. In said implementation, the data 116 includes transaction data 130, user preference data 132, and other data 134. The other data 134 amongst other things, may serve as a repository for storing data that is processed, received, or generated as a result of the execution of one or more modules in the module(s) 114. Although the data 116 is shown internal to the system 102, it may be understood that the data 116 can reside in an external repository (not shown in the figure), which may be coupled to the system 102. The system 102 may communicate with the external repository through the interface(s) 110 to obtain information from the data 116.

As mentioned before, the system 102 is configured to receive status update request for tracking updated status of transactions between users and other parties. In one implementation, the request analysis module 122 is configured to receive such request from any one of the user devices 104. A user, through the user device 104 may provide the status update request to the system 102. The request analysis module 122 may receive the status update request through the interface 110 from the network 106. In said implementation, the status update request may include tracking parameters and user preferences that may affect the tracking of updated status for the transaction by the system 102.

For example, a user who wishes to track the status of his train reservation may send a status update request from the user device 104-1 to the system 102 through the network 106. The request analysis module 122 may receive this status update request. In one implementation, the request analysis module 122 may generate a Unique Reference Number (URN) specific to the received status update request. The URN may be understood as a reference number associated with the status update request of the user with the system 102, for future reference and identification purpose. For example, the user may refer to the URN for enquiry about the status of his status update request in case on communication glitch or fault.

Further, the system 102 may also store the information provided by the user in the status update request along with the generated URN. Also, the request analysis module 122 may associate the user details along with his desired preferences with the URN. It would be appreciated that the request analysis module 122 may generate a new URN for each status update request. Further, in situations where multiple status update requests are received from multiple users, each message is associated with a new URN. Further, even in situations where multiple status update requests for different transactions are received from a single user, each status update request is associated with a new URN number by the request analysis module 122.

As described, the status update request received by the request analysis module 122 may include the tracking parameters and user preferences to track the status of the transaction between the user and the other party. The tracking parameters may include the transaction details, such as, the reference number of the transaction along with other details that may provide the request analysis module to uniquely determine the transaction. Further, the tracking parameters may also include the details of the other party through which the updated status of the transaction can be monitored.

For example, to track the status of an appointment with a hospital, say, Apollo Medicare, the tracking parameter may include the URL of the website of Apollo Medicare through which the status of a transaction between any user and Apollo Medicare can be tracked based on the specific transaction details. It would be understood that the other party may support and provide multiple techniques and methods through which it may allow tracking of status for the user's benefit. Also, some other parties also provide multiple channels of a single technique to allow users to track the status of their transaction. For example, IRCTC may allow users to track the status of their reservation either through web interface, via SMS query, or by IVRS. Availability of multiple techniques may allow the users to choose from different methods according to their need and available resources. Further, to facilitate efficient service to users, IRCTC may also provide multiple web portals and several IVRS toll free numbers to the users to track the status of their reservation. In situations where there is more than one possible method of tracking the status of a transaction, the user may choose any particular method and indicate the same to the system 102 through the tracking parameters in the status update request. For example, the user providing the status update request through the user device 104-1 may provide the details of a web portal provided by IRCTC for tracking of reservation rather than the details of the IVRS. The system 102 may store the transaction details against each URN in the transaction data 130.

Moreover, the users may also choose from among the multiple web portals and toll free numbers from which the status can be tracked. For example, from among the multiple web portals provided by IRCTC, the user may only provide the details of a single web portal based on his personal preference. Although it has been described that the user may choose certain methods of status tracking from the multiple available options, it would be understood that the user may choose more than one possible options based on his personal preference.

Although it has been described that the user may provide the details of the other party, however, in one implementation the request analysis module 122 may provide a list of other parties for which the service of status update can be provided to the user. From the provided list of options, the user may choose the other party from which the user has completed transaction with. In such an implementation, the system 102 may provide an exhaustive list of vendors, suppliers, medical sources, reservation portals, and other parties that may provide service of tracking the status of their transactions.

As described, the request analysis module 122 of the system 102 may associate each status update request with a new URN. In one implementation, the URN may also be provided to the user for his reference. The user may utilize the URN for various purposes, such as, for communication with the system 102, cancelling the status update request, modifying the user preferences, and changing the tracking parameters.

In one implementation, the status update request may also include update parameters that may define user preferences for tracking the status of the transaction described in the status update request. The update parameters may include, but are not limited to, frequency of update, duration of update, mode of update, and time of update. The user may provide, along with the tracking parameters, the update parameters to provide his preferences for tracking the status of the transaction. The frequency of update may define the frequency with which the user wishes to receive the status of the transaction. The frequency may be defined in terms of hours, days or weeks depending upon the preference of the user. Further, the duration of update may indicate the time period for which the update may be desired by the user. For example, a user may wish to receive status update for a transaction for 3 days only. Similarly, another user may define the duration of update to be 1 week or a month. It would be understood that the update parameters are indicative of user preferences and in absence of any such preferences, default values may be assumed by the request analysis module 122. For the sake of brevity, the default values have not been defined however, it would be understood that the system 102 may define different default values for different update parameters. Further, the system 102 may also define different set of default values for different users where for a user, a particular set of default values may be applied.

In another implementation of the present subject matter, similar to providing the exhaustive list of other parties to the user, the system 102 may be configured to provide the option of update parameters to the user. The users may be provided with the parameters against which the users may provide value. For example, the user utilizing the user device 104-1 may be requested by the system 102 to provide the frequency for which he wishes to receive the status updates for the transaction. Similarly, the system 102 may also request for other details such as, duration of update, mode of update, and time of update. The update parameters provided by the user may be stored by the system 102 in the user preference data 132.

In another implementation, the update parameters providing user references may be defined once by a user and the system 102 may utilize the same update parameters for consecutive other status update requests received from the user. This may allow the users to define their preferences once and would reduce the information required to be provided by the users again and again in different requests. It would be understood that although the user may choose a set of update parameters for subsequent requests, the user may also choose to define fresh update parameters for a particular status update request. It would further be understood that the tracking parameters providing the transaction details of the user are specific to a transaction and may not be applicable for subsequent requests from the user. Therefore, the tracking parameters may be provided by the users for each status update request.

In one implementation of the present subject matter, the tracking parameters and the update parameters provided for a transaction may be updated and modified by a user. In other words, the user may change the set of tracking and update parameters. To this end, the user may send a request modification message to the system 102 through the network 106. The request modification message may include the URN for which the user wishes to modify the parameters along with the new values for the parameters. It would be understood that the system 102 stores the transaction details along with the user preferences for each message based on URN and therefore, providing URN for modification of parameters would only modify the parameters associated with the specific URN.

Upon receiving the status update request along with the tracking parameters and the update parameters defining user preferences, the system 102 may obtain the status of the transaction specified by the user in the status update request. In one implementation, the querying module 124 of the system 102 is configured to query the other party to obtain the status of the transaction. In said implementation, the querying module 124 may utilize the transaction details associated with the request of the user received by the querying module 124 from the transaction data 130.

In another implementation, the status of the transaction received by the querying module 124 may be provided to the user through the network 106. In said implementation, the reporting module 126 is configured to provide the status of the transaction to the user based on the update parameters. That is, the reporting module 126 may determine the user preferences related to reporting of the status update and based on these preferences, may provide the status update to the user. For a user wishing to receive updates daily, the reporting module 126 may provide the status update of the transaction on a daily basis. Similarly, another user may wish to end the status updates soon after confirmation of an appointment based on which, the reporting module 126 may also analyze the status to provide the status update till the time the status of the transaction is not confirmed.

Similarly, a user may wish to receive the updated status of his transaction through e-mails and not SMS or telephonic calls. In such a situation, based on the user preference of mode of communication, the reporting module 126 may send an e-mail to the user providing the updated status of the transaction. Further, the user may also define 11:00 am as the time of update based on which the reporting module 126 may provide the status update to the user. It would be appreciated that different users may have different preferences and therefore, based on such preferences, the reporting module 126 may provide the updated status of transactions to the users.

Fig. 2 illustrates method 200 for providing status update of a transaction between a user and other party, according to an embodiment of the present subject matter. The order in which the method 200 is described is not intended to be construed as a limitation, and any number of the described method blocks can be combined in any order to implement the method 200, or any alternative methods. Additionally, individual blocks may be deleted from the method without departing from the scope of the subject matter described herein. Furthermore, the method can be implemented in any suitable hardware, software, firmware, or combination thereof.

The method may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

A person skilled in the art will readily recognize that steps of the method can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media. The embodiments are also intended to cover both communication network and communication devices configured to perform said steps of the exemplary methods.

Referring to Fig. 2, at block 202, a status update request is received, from a user, to track status of a transaction between the user and other party. In one implementation of the present subject matter, the user may provide the status update request through a communication network utilizing methods such as, USSD message, SMS, IVRS, e-mail, and others. In said implementation, the status update request may be received by an entity of the communication network or a service provider to provide updated status of the transaction to the user.

At block 204, at least tracking parameters and update parameters associated with the status update request are identified. The tracking parameters may provide the details of the other party and transaction details for which the user wishes to track the status. The update parameters may provide the user preference related to tracking the status of the transaction and communication of the updates back to the user. In one implementation, the update parameters may include, but not limited to frequency of update, duration of update, mode of update, and time of update.

At block 206, the other party is polled based on tracking parameters and update parameters to obtain an updated status of the transaction. In one implementation, the system 102 polls the other party to obtain the status of the transaction. As described, the transaction details are received along with the tracking parameters received along with the status update request. It would be understood that the polling may be done as per the defined update parameters in the status update request.

At block 208, the updated status of the transaction is provided to the user based on the update parameters. As described, the update parameters may define the frequency of update, the mode of update and the time of update of the status and therefore, the updated status of the transaction may be provided to the user based on the updated parameters.

Although embodiments for methods and systems for providing updated status of a transaction have been described in a language specific to structural features and/or methods, it is to be understood that the invention is not necessarily limited to the specific features or methods described. Rather, the specific features and methods are disclosed as exemplary embodiments for providing status update for transactions.

## Claims

1. A method for providing status update of a transaction in a network environment, the method comprising:
receiving a status update request by a server, from a communication device of a user, to track status of the transaction between the user and an other party, wherein the status update request comprises tracking parameters and update parameters, associated with the status update,
polling the other party through a communication network, based on the tracking parameters and the update parameters to obtain an updated status of the transaction; and
providing the updated status of the transaction to the communication device of the user based on the update parameters;
the method being **characterized in that** it is also comprising:
the update parameters define preferences of the user about the frequency of a status update.

2. The method as claimed in claim 1, wherein the receiving comprises obtaining the status update request through at least one of USSD message, SMS, e-mail, and Interactive Voice Response Systems (IVRS).

3. The method as claimed in claim 1, wherein the receiving further comprises obtaining at least one of the tracking parameters and the update parameters associated with the transaction, in a separate message from the user.

4. The method as claimed in claim 3, wherein the obtaining comprises:
providing to the user an exhaustive list of the other party details and the update parameters; and
receiving the user response corresponding to the tracking parameters and the update parameters.

5. The method as claimed in claim 1, wherein the status update request is associated with a unique reference number (URN), wherein the URN allows unique identification of the tracking parameters and the update parameters associated with the status update request.

6. A system (102) for providing updated status of a transaction comprises:
a processor (108);
a request analysis module (122) coupled to the processor (108), configured to receive a status update request, from a user, to track status of the transaction between the user and other party, wherein the status update request comprises tracking parameters and update parameters, associated with the status update;
a querying module (124) coupled to the processor (108), configured to poll the other party based on the tracking parameters and the update parameters to obtain an updated status of the transaction; and
a reporting module (126) coupled to the processor (108), configured to provide the updated status of the transaction to the user based on the update parameters
the system being **characterized in that** the update parameters define preferences of the user about the frequency of a status update.

7. The system as claimed in claim 6, wherein the request analysis module (122) is further configured to obtain at least one of the tracking parameters and the update parameters associated with the transaction from the user.

8. The system (102) as claimed in claim 7, wherein the request analysis module (122) is configured to:
provide an exhaustive list of other party details and update parameters to the user; and
receive the user response corresponding to the tracking parameters and update parameters.

9. The system as claimed in claim 6, wherein the request analysis module (122) is further configured to associate the status update request with a unique reference number (URN), wherein the URN allows unique identification of the tracking parameters and the update parameters associated with the status update request.

10. A computer readable medium having embodied thereon a computer program for executing a method for providing status update for a transaction, the method comprising:
receiving a status update request, from a user, to track status of the transaction between the user and other party, wherein the status update request comprises tracking parameters and update parameters associated with the status update;
polling the other party based on the tracking parameters and the user preferences to obtain an updated status of the transaction; and
providing the updated status of the transaction to the user based on the user preferences
the method being **characterized in that** it is also comprising:
the update parameters define preferences of the user about the frequency of a status update.

## Patentansprüche

1. Verfahren für das Bereitstellen einer Statusaktualisierung einer Transaktion in einer Netzwerkumgebung, wobei das Verfahren umfasst:
das durch einen Server erfolgende Empfangen einer Statusaktualisierungsanfrage von einem Kommunikationsgerät eines Benutzers zum Nachverfolgen der Transaktion zwischen dem Benutzer und einer anderen Partei, wobei die Statusaktualisierungsanfrage Nachverfolgungsparameter und Aktualisierungsparameter umfasst, die mit der Statusaktualisierung assoziiert sind;
das über ein Kommunikationsnetzwerk erfolgende Tätigen einer Anfrage bei der anderen Partei auf der Grundlage der Nachverfolgungsparameter und der Aktualisierungsparameter zwecks Erhalts eines aktualisierten Status der Transaktion; und
das Bereitstellen des aktualisierten Status der Transaktion an das Kommunikationsgerät des Benutzers auf der Grundlage der Aktualisierungsparameter;
wobei das Verfahren **dadurch gekennzeichnet ist, dass** es weiterhin umfasst:
das Definieren von Präferenzen des Benutzers zur Frequenz einer Statusaktualisierung durch die Aktualisierungsparameter.

2. Das Verfahren nach Anspruch 1, wobei das Empfangen umfasst, die Statusaktualisierungsanfrage mindestens entweder durch eine USSD-Nachricht, eine SMS, eine E-Mail oder ein Interactive Voice Response System (IVRS) zu erhalten.

3. Das Verfahren nach Anspruch 1, wobei das Empfangen weiterhin umfasst, mindestens entweder die Nachverfolgungsparameter oder die Aktualisierungsparameter, die mit der Transaktion assoziiert sind, in einer separaten Nachricht von dem Benutzer zu erhalten.

4. Das Verfahren nach Anspruch 3, wobei das Erhalten umfasst:
dem Benutzer eine ausführliche Liste der detaillierten Angaben zur anderen Partei und die Aktualisierungsparameter zur Verfügung zu stellen; und
die Benutzerantwort zu empfangen, die den Nachverfolgungsparametern und den Aktualisierungsparametern entspricht.

5. Das Verfahren nach Anspruch 1, wobei die Statusaktualisierungsanfrage mit einer eindeutigen Referenznummer (Unique Reference Number, URN) assoziiert ist, wobei die URN die eindeutige Identifizierung der Nachverfolgungsparameter und der Aktualisierungsparameter ermöglicht, welche mit der Statusaktualisierungsanfrage assoziiert sind.

6. System für das Bereitstellen des aktualisierten Status einer Transaktion, umfassend:
einen Prozessor (108);
ein Anfrageanalysemodul (122), gekoppelt an einen Prozessor (108) und konfiguriert für das Empfangen einer Statusaktualisierungsanfrage von einem Benutzer zum Nachverfolgen der Transaktion zwischen dem Benutzer und einer anderen Partei, wobei die Statusaktualisierungsanfrage Nachverfolgungsparameter und Aktualisierungsparameter umfasst, die mit der Statusaktualisierung assoziiert sind;
ein Abfragemodul (124), gekoppelt mit dem Prozessor (108) und dafür konfiguriert, um an die andere Partei auf der Grundlage der Nachverfolgungsparameter und der Aktualisierungsparameter eine Anfrage zu richten, um einen aktualisierten Status der Transaktion zu erhalten; und
ein Berichtsmodul (126), gekoppelt mit dem Prozessor (108) und dafür konfiguriert, um den aktualisierten Status der Transaktion auf der Grundlage der Aktualisierungsparameter dem Benutzer bereitzustellen,
wobei das System **gekennzeichnet ist durch** das Definieren von Präferenzen des Benutzers zur Frequenz einer Statusaktualisierung **durch** die Aktualisierungsparameter.

7. Das System nach Anspruch 6, wobei das Anfrageanalysemodul (122) weiterhin dafür konfiguriert ist, um von dem Benutzer mindestens entweder die Nachverfolgungsparameter oder die Aktualisierungsparameter zu erhalten, die mit der Transaktion assoziiert sind.

8. Das System (102) nach Anspruch 7, wobei das Anfrageanalysemodul (122) weiterhin konfiguriert ist für:
das Bereitstellen einer ausführlichen Liste mit Angaben zur anderen Partei und Aktualisierungsparametern zum Benutzer; und
das Empfangen der Benutzerantwort, die den Nachverfolgungsparametern und den Aktualisierungsparametern entspricht.

9. Das System nach Anspruch 6, wobei das Anfrageanalysemodul (122) weiterhin dafür konfiguriert ist, um die Statusaktualisierungsanfrage mit einer eindeutigen Referenznummer (Unique Reference Number, URN) zu assoziierten, wobei die URN die eindeutige Identifizierung der Nachverfolgungsparameter und der Aktualisierungsparameter ermöglicht, welche mit der Statusaktualisierungsanfrage assoziiert sind.

10. Computerlesbaren Medium mit installiertem Computerprogramm für das Ausführen eines Verfahrens zur Bereitstellung einer Statusaktualisierung für eine Transaktion, wobei das Verfahren umfasst:
das Empfangen einer Statusaktualisierungsanfrage von einem Benutzer zum Nachverfolgen der Transaktion zwischen dem Benutzer und der anderen Partei, wobei die Statusaktualisierungsanfrage Nachverfolgungsparameter und Aktualisierungsparameter umfasst, die mit der Statusaktualisierung assoziiert sind;
das Tätigen einer Anfrage bei der anderen Partei auf der Grundlage der Nachverfolgungsparameter und der Benutzerpräferenzen zwecks Erhalts eines aktualisierten Status der Transaktion; und
das Bereitstellen des aktualisierten Status der Transaktion für den Benutzer auf der Grundlage der Benutzerpräferenzen;
wobei das Verfahren **dadurch gekennzeichnet ist, dass** es weiterhin umfasst:
das Definieren von Präferenzen des Benutzers zur Frequenz einer Statusaktualisierung durch die Aktualisierungsparameter.

## Revendications

1. Procédé de fourniture d'une mise à jour d'état d'une transaction dans un environnement de réseau, le procédé comprenant les étapes suivantes :
recevoir une requête de mise à jour d'état par un serveur, provenant d'un dispositif de communication d'un utilisateur, pour suivre l'état de la transaction entre l'utilisateur et une autre partie, la requête de mise à jour d'état comprenant des paramètres de suivi et des paramètres de mise à jour associés à la mise à jour d'état,
interroger l'autre partie par l'intermédiaire d'un réseau de communication sur la base des paramètres de suivi et des paramètres de mise à jour pour obtenir un état mis à jour de la transaction ; et
fournir l'état mis à jour de la transaction au dispositif de communication de l'utilisateur sur la base des paramètres de mise à jour ;
le procédé étant également **caractérisé en ce que** :
les paramètres de mise à jour définissent des préférences de l'utilisateur à propos de la fréquence d'une mise à jour d'état.

2. Procédé selon la revendication 1, dans lequel la réception comprend l'obtention de la requête de mise à jour d'état par l'intermédiaire d'un message USSD et/ou d'un SMS et/ou d'un courrier électronique et/ou de systèmes de réponse vocale interactifs (SRVI).

3. Procédé selon la revendication 1, dans lequel la réception comprend en outre l'obtention d'au moins un des paramètres de suivi et des paramètres de mise à jour associés à la transaction, dans un message séparé à partir de l'utilisateur.

4. Procédé selon la revendication 3, dans lequel l'obtention comprend les étapes suivantes :
fournir à l'utilisateur une liste exhaustive des détails de l'autre partie et des paramètres de mise à jour ; et
recevoir la réponse d'utilisateur correspondant aux paramètres de suivi et aux paramètres de mise à jour.

5. Procédé selon la revendication 1, dans lequel la requête de mise à jour d'état est associée à un numéro de référence unique (URN), l'URN permettant l'identification unique des paramètres de suivi et des paramètres de mise à jour associés à la requête de mise à jour d'état.

6. Système (102) pour fournir un état mis à jour d'une transaction comprenant :
un processeur (108) ;
un module d'analyse de requête (122) couplé au processeur (108), configuré pour recevoir une requête de mise à jour d'état, provenant d'un utilisateur, pour suivre l'état de la transaction entre l'utilisateur et l'autre partie, la requête de mise à jour d'état comprenant des paramètres de suivi et des paramètres de mise à jour, associés à la mise à jour d'état ;
un module d'interrogation (124) couplé au processeur (108), configuré pour interroger l'autre partie sur la base des paramètres de suivi et des paramètres de mise à jour pour obtenir un état mis à jour de la transaction ; et
un module de rapport (126) couplé au processeur (108), configuré pour fournir l'état mis à jour de la transaction à l'utilisateur sur la base des paramètres de mise à jour,
le système étant **caractérisé en ce que** les paramètres de mise à jour définissent des préférences de l'utilisateur à propos de la fréquence d'une mise à jour d'état.

7. Système selon la revendication 6, dans lequel le module d'analyse de requête (122) est en outre configuré pour obtenir les paramètres de suivi et/ou les paramètres de mise à jour associés à la transaction à partir de l'utilisateur.

8. Système (102) selon la revendication 7, dans lequel le module d'analyse de requête (122) est configuré pour :
fournir à l'utilisateur une liste exhaustive des détails de l'autre partie et des paramètres de mise à jour ; et
recevoir la réponse d'utilisateur correspondant aux paramètres de suivi et aux paramètres de mise à jour.

9. Système selon la revendication 6, dans lequel le module d'analyse de requête (122) est en outre configuré pour associer la requête de mise à jour d'état à un numéro de référence unique (URN), l'URN permettant l'identification unique des paramètres de suivi et des paramètres de mise à jour associés à la demande de mise à jour d'état.

10. Support lisible par ordinateur intégrant un programme informatique pour exécuter un procédé pour fournir une mise à jour d'état pour une transaction, le procédé comprenant les étapes suivantes :
recevoir une requête de mise à jour d'état, provenant d'un utilisateur, pour suivre l'état de la transaction entre l'utilisateur et une autre partie, la requête de mise à jour d'état comprenant des paramètres de suivi et des paramètres de mise à jour associés à la mise à jour d'état,
interroger l'autre partie sur la base des paramètres de suivi et des préférences de l'utilisateur pour obtenir un état mis à jour de la transaction ; et
fournir l'état mis à jour de la transaction à l'utilisateur sur la base des préférences de l'utilisateur
le procédé étant également **caractérisé en ce que** :
les paramètres de mise à jour définissent des préférences de l'utilisateur à propos de la fréquence d'une mise à jour d'état.
